# EUROPÄISCHE PATENTANMELDUNG

(11) **EP 3 034 631 A1**
(43) Veröffentlichungstag der Anmeldung: **22.06.2016**
(21) Anmeldenummer: 14198547.3
(22) Anmeldetag: 17.12.2014
(51) Int. Cl.: C21B 13/00

(54) **Direktreduktionsverfahren mit Gaskühlung**

(71) Anmelder: Primetals Technologies Austria GmbH, 4031 Linz (AT)
(72) Erfinder: Eder, Thomas, 4050 Traun (AT); Fischer, Harald, 4020 Linz (AT); Forstner, Andreas, 4070 Fraham (AT); Millner, Robert, 3382 Loosdorf (AT); Oberndorfer, Ernst, 4020 Linz (AT)
(74) Vertreter: Metals@Linz

(57) **Zusammenfassung**

Die Anmeldung betrifft ein Verfahren zur Direktreduktion von eisenoxidhältigen Einsatzstoffen in einem Reduktionsaggregat mittels eines Reduktionsgases, wobei das bei der Reduktion verbrauchte Reduktionsgas als Topgas aus dem Reduktionsaggregat (2) abgezogen wird, und wobei das Produkt der Direktreduktion zu einem Brikettierungsprodukt, vorzugsweise zu HBI (5), heiß brikettiert wird. Dabei wird das heiß brikettierte Brikettierungsprodukt in einer Kühleinrichtung (6) mittels eines Kühlgases einer Kühlung unterzogen. Zumindest eine Teilmenge des bei der Kühlung erwärmten Kühlgases wird in einen Wärmetauscher (7) eingeleitet, und zumindest ein Teil der in dem Wärmetauscher (7) auf ein Wärmetauschermedium übertragenen Wärme wird innerhalb des Verfahrens genutzt.

## Beschreibung

### Gebiet der Technik

Die Anmeldung betrifft ein Verfahren zur Direktreduktion von eisenoxidhältigen Einsatzstoffen in einem Reduktionsaggregat mittels eines Reduktionsgases, wobei das bei der Reduktion verbrauchte Reduktionsgas als Topgas aus dem Reduktionsaggregat abgezogen wird, und wobei das Produkt der Direktreduktion zu einem Brikettierungsprodukt, vorzugsweise zu HBI (5), heiß brikettiert wird.

### Stand der Technik

Es ist beispielsweise aus US2010264374A bekannt, Direktreduktion von oxidhältigen Einsatzstoffen in einem Reduktionsaggregat mittels eines Reduktionsgases durchzuführen, und dabei das bei der Reduktion verbrauchte Reduktionsgas als Topgas aus dem Reduktionsaggregat abzuziehen und nach katalytischer Reformierung wieder als Bestandteil des Reduktionsgases zu nutzen. Dabei wird auch ein Teil des Topgases chemisch von CO2 befreit und dann zur Unterfeuerung des Reformers genutzt. Der Dampfbedarf zur Regeneration des Absorptionsmediums für die chemische CO2-Entfernung wird dabei nicht aus dem Reduktionsverfahren selbst gedeckt; die Wärmemenge in den diversen Abgasen des Prozesses der US2010264374A würde dazu nicht ausreichen. Infolgedessen ist zur Bereitstellung einer ausreichenden Wärme- beziehungsweise Dampfmenge auf andere Energielieferanten zurückzugreifen, was den spezifischen Energieverbrauch und damit die Verfahrenskosten erhöht.

### Zusammenfassung der Erfindung

### Technische Aufgabe

Es ist Aufgabe der vorliegenden Anmeldung, ein Verfahren sowie eine Vorrichtung zu seiner Durchführung bereitzustellen, durch das die Energiebilanz des Verfahrens verbessert wird.

### Technische Lösung

Diese Aufgabe wird gelöst durch ein Verfahren zur Direktreduktion von eisenoxidhältigen Einsatzstoffen in einem Reduktionsaggregat mittels eines Reduktionsgases, wobei das bei der Reduktion verbrauchte Reduktionsgas als Topgas aus dem Reduktionsaggregat abgezogen wird, und wobei das Produkt der Direktreduktion zu einem Brikettierungsprodukt, vorzugsweise zu HBI, heiß brikettiert wird. Das Verfahren ist **dadurch gekennzeichnet, dass** das heiß brikettierte Brikettierungsprodukt, vorzugsweise HBI, in einer Kühleinrichtung mittels eines Kühlgases einer Kühlung unterzogen wird, und dass zumindest eine Teilmenge des bei der Kühlung erwärmten Kühlgases in einen Wärmetauscher eingeleitet wird, und dass zumindest ein Teil der in dem Wärmetauscher auf ein Wärmetauschermedium übertragenen Wärme innerhalb des Verfahrens genutzt wird.

HBI steht für hot briquetted iron. Der Metallisierungsgrad ist das Verhältnis zwischen metallischem Eisen und Gesamteisen im HBI; er ist bei HBI ≥ 88%. Die Dichte von HBI ist laut aktuellen International Maritime Organization IMO Vorschriften ≥ 5 kg/dm³. Die Dichte des heiß brikettierten Brikettierungsproduktes kann auch unter dieser Dichte liegen, beispielsweise falls aus bestimmten Rohstoffen oder für besondere Zwecke hergestellt wird.

Bei der heißen Brikettierung kann direkt ein Brikett hergestellt werden, oder es können Stränge - auch Schülpen genannt - hergestellt werden, die entweder selber brechen oder mittels Brecher in kleinere Stücke gebrochen werden, bevor man sie in die Kühleinrichtung.

Zur Gewährleistung eines thermodynamisch, kinetisch und wirtschaftlich befriedigenden Ablaufs der Direktreduktion und Brikettierung muss sie bei erhöhten Temperaturen ablaufen, weshalb das heiß brikettierte Brikettierungsprodukt, vorzugsweise HBI, nach der Reduktion und Brikettierung Temperaturen zwischen circa 600°C bis 750°C aufweist.

Im Stand der Technik analog zu US2010264374A erfolgt eine Kühlung von HBI - zur Ermöglichung der Handhabbarkeit, der Zwischenlagerung und des Transportes, sowie auch zur Vermeidung einer Verschlechterung der HBI-Qualität durch unerwünschte Reaktionen bei hohen Temperaturen - mittels Wasserbad oder Wasserspray, wobei durch Verdampfen des Wassers Wärme in die Umwelt verloren geht, ohne im Verfahren erneut genutzt zu werden. Im Gegensatz dazu ist das vorgeschlagene Verfahren energieeffizienter und verbraucht weniger Wasser, da das Kühlmedium ein Kühlgas ist.

Erfindungsgemäß wird Wärme nicht mittels Wasserkühlung abgezogen, sondern mittels eines Kühlgases vom heiß brikettierten Brikettierungsprodukt, vorzugsweise HBI, abgezogen und dann vom Kühlgas auf ein Wärmetauschermedium übertragen. Über das Wärmetauschermedium wird die Wärme innerhalb des Verfahrens zur Direktreduktion nutzbar gemacht. Somit verlässt sie das Verfahren nicht, wodurch dieses energieeffizienter und kostengünstiger wird.

Ein weiterer Vorteil liegt einerseits in der im Vergleich zu einer Wasserkühlung langsameren Abkühlgeschwindigkeit, und andererseits darin, dass das Innere des heiß brikettierten Brikettierungsproduktes, vorzugsweise HBI, nicht in Kontakt mit Wasser kommt, wodurch die Zerfallsneigung verringert wird. Dadurch entstehen weniger unerwünschte Fines im Materialhandling - was durch einen Trommeltest (Tumble Index) nachgewiesen werden kann.

Kühlgas kann jedes Gas sein, das unter den bei der Kühlung herrschenden Bedingungen praktisch nicht mit dem heiß brikettierte Brikettierungsprodukt, vorzugsweise HBI, reagiert. Bevorzugterweise ist es Stickstoff, Rauchgas - beispielsweise aus dem Abgas eines Reformers oder eines Inertgasgenerators - , oder Luft.

Nach einer Ausführungsform wird im Gegenstrom gekühlt, beispielsweise in einem Schachtkühler, bis auf eine Temperatur kleiner 100°C - um die Handhabbarkeit, Lagerung und Transport, beispielsweise über Förderbänder, zu vereinfachen und unerwünschte Reaktionen zu verringern. Auf diese Weise kann dem heiß brikettierten Brikettierungsprodukt, vorzugsweise HBI, die Wärme besonders effizient entzogen werden.

### Vorteilhafte Wirkungen der Erfindung

Nach einer Ausführungsform wird das Reduktionsgas unter katalytischer Reformierung mit einer ersten Teilmenge des Topgases erzeugt. Dadurch wird dessen verbliebenes Reduktionspotential besonders gut in dem Verfahren ausgenutzt. Selbstverständlich werden zur Erzeugung von Reduktionsgas auch eine oder mehrere zusätzliche Komponenten zugefügt, beispielsweise Erdgas; das ist aus dem Stand der Technik bekannt. Bei der katalytischen Reformierung entstehendes Gas wird in der Folge auch Reformergas genannt.

Nach einer weiteren Ausführungsform wird eine zweite Teilmenge des Topgases in einer chemischen CO2-Entfernungsanlage einer CO2-Entfernung unterzogen. Dadurch wird vermieden, dass bei nachfolgender Nutzung - beispielsweise als Brenngas im Reformer - die CO2-Fracht des Topgases mitgeschleppt werden muss. Außerdem wird dabei CO2 gewonnen, welches beispielsweise bei der Erdöl- oder Erdgasgewinnung genutzt werden kann. Das entfernte CO2 kann auch sequestriert werden, um es nicht in die Atmosphäre zu entlassen.

Nach einer weiteren Ausführungsform ist die CO2-Entfernung eine absorptive CO2-Entfernung mittels eines Absorptionsmediums.

Nach einer Ausführungsform dabei umfasst die Nutzung innerhalb des Verfahrens die Nutzung zur Regeneration des Absorptionsmediums oder Nutzung für CO-Shiftreaktion von Topgas, bevorzugt durch Generierung von dabei eingesetztem Dampf - beispielsweise eingesetzt zur Regeneration von Absorptionsmedium.

Eine andere Nutzung kann erfolgen, indem Wärmeträgermedien wie beispielsweise Thermo-Öl erwärmt und dann im Verfahren verwendet werden.

Auf diese Weise wird die Wärme einfach im Verfahren genutzt und vermindert den Bedarf an anderen Energielieferanten zur Dampferzeugung.

Nach einer Ausführungsform wird zumindest eine Teilmenge des Produktgases der CO2-Entfernung zur Erzeugung des Reduktionsgases genutzt wird. Dadurch wird dessen verbliebenes Reduktionspotential besonders gut in dem Verfahren ausgenutzt. Unter dem Produktgas der CO2-Entfernung ist das Gas zu verstehen, in dem der CO2-Gehalt geringer ist als vor der CO2-Entfernung. Das Gas, in dem der CO2-Gehalt höher ist als vor der CO2-Entfernung, wird Tailgas genannt.

Reduktionsgas kann beispielsweise durch Mischung von Reformergas mit Produktgas hergestellt werden.

Nach einer Ausführungsform wird zumindest eine Teilmenge des Produktgases der CO2-Entfernung als Brenngas genutzt für zumindest eine Unterfeuerung aus der Gruppe bestehend aus den Mitgliedern
- Unterfeuerung eines Reformers zur katalytischen Reformierung einer ersten Teilmenge des Topgases,
- Unterfeuerung eines Gasofens zur Aufheizung des Reduktionsgases oder eines Vorläufers des Reduktionsgases.

Reformer zur Durchführung katalytischer Reformierung gemäß der überwiegenden Reformierungsreaktionen

CH4 + CO2 → 2 CO+ 2 H2

CH4 + H2O → CO + 3 H2

benötigen Energiezufuhr durch Unterfeuerung, da diese Reformierungsreaktionen stark endotherm sind.

Das Reduktionsgas wird in das Reduktionsaggregat eingeleitet. Es kann beispielsweise durch Mischung mehrerer Komponenten - wie beispielsweise Reformergas und Produktgas - hergestellt werden. Ein Vorläufer des Reduktionsgases ist beispielsweise eine solche Komponente.

Um für die Reduktion im Reduktionsaggregat thermodynamisch und kinetisch günstige, wirtschaftlich tragbare Bedingungen zu schaffen, muss das Reduktionsgas eine Mindesttemperatur haben. Zur Sicherstellung einer solchen Temperatur kann es vorteilhaft sein, einen Gasofen bereitzustellen zur Aufheizung des Reduktionsgases oder von Vorläufern des Reduktionsgases.

Nach einer Ausführungsform umfasst die Nutzung innerhalb des Verfahrens Erwärmung zumindest eines Teils der zur Erzeugung des Reduktionsgases genutzten Teilmenge des Produktgases
vor deren Einleitung in das Reduktionsaggregat, bevorzugt vor einer Vermischung mit anderen Komponenten des Reduktionsgases.

Zur Gewährleistung eines thermodynamisch, kinetisch und wirtschaftlich befriedigenden Ablaufs der Direktreduktion und Brikettierung muss sie bei erhöhten Temperaturen ablaufen, weshalb das heiß brikettierte Brikettierungsprodukt, vorzugsweise HBI, nach der Reduktion und Brikettierung Temperaturen zwischen circa 600°C bis 750°C aufweist. Entsprechend muss das Reduktionsgas erwärmt werden. Erfindungsgemäß wird dazu Wärme aus der Kühlung des heiß brikettierte Brikettierungsproduktes, vorzugsweise HBI, genutzt, was das Verfahren energieeffizienter und wirtschaftlicher macht.

Nach einer Ausführungsform wird die zweite Teilmenge des Topgases einer Behandlung unterzogen, bevor sie in einer chemischen CO2-Entfernungsanlage einer CO2-Entfernung unterzogen wird,
wobei diese Behandlung umfasst:
- zuerst Zugabe von Wasserdampf, dann
- CO-Shiftreaktion in einem CO-Shiftreaktor.

Dadurch wird die Generierung von für die Direktreduktion besonders günstigen Komponenten des Reduktionsgases durch die exotherme Reaktion

CO+H20 --> CO2+H2

hervorgerufen. Das Produkt der CO-Shiftreaktion wird in der Folge auch Shiftgas genannt.

Dabei ist es bevorzugt, dass das bei der CO-Shiftreaktion gewonnene Shiftgas in einen Wärmetauscher zur Herstellung von Wasserdampf eingeleitet wird. Auf diese Weise wird der Wärmeinhalt nach der exothermen CO-Shiftreaktion in einen Wertstoff umgewandelt, der auch im Verfahren genutzt werden kann.

Dabei ist es bevorzugt, dass dieser Wasserdampf und/oder Wasserdampf hergestellt unter Nutzung von vom Kühlgas auf das Wärmetauschmedium übertragener Wärme, zugeführt wird - der chemischen CO2-Entfernungsanlage zur Regeneration des Absorptionsmediums,
und/oder
- der zweiten Teilmenge des Topgases vor der CO-Shiftreaktion.

An diesen Stellen des Verfahrens wird ohnehin Wasserdampf benötigt. Bereitstellung aus dem Verfahren heraus vergrößert dessen Energieeffizienz und macht es kostengünstiger.

Im erfindungsgemäßen Verfahren ist es bevorzugt , wenn
- Wärme aus dem Topgas,
   und/oder
- Wärme aus dem Shiftgas,
   und/oder
- Wärme aus einem aus dem Reformer abgezogenen Rauchgas,
genutzt wird
- zur Erwärmung zumindest eines Teils der zur Erzeugung des Reduktionsgases genutzten Teilmenge des Produktgases vor deren Einleitung in das Reduktionsaggregat, bevorzugt vor einer Vermischung mit anderen Komponenten des Reduktionsgases,
   und/oder
- zur Generierung von zur Regeneration des Absorptionsmediums eingesetztem Wasserdampf.

Die Nutzung dieser verfahrensinternen Wärmequellen vergrößert die Energieeffizienz des Verfahrens und macht es kostengünstiger. Die Nutzung erfolgt beispielsweise über indirekten Wärmeaustausch mit oder ohne Wärmeträgermedium. Im Falle eines Wärmeträgermediums kann beispielsweise Dampf oder Thermoöl dafür eingesetzt werden.

Im erfindungsgemäßen Verfahren ist es bevorzugt, wenn bei Bedarf an überhitztem Wasserdampf im Verfahren der Wasserdampf mittels des Kühlgases überhitzt wird. Die Nutzung dieser verfahrensinternen Wärmequelle vergrößert die Energieeffizienz des Verfahrens und macht es kostengünstiger.

Eine Rückführung von Kühlgas, nachdem ihm die vom heiß brikettierten Brikettierungsprodukt, vorzugsweise HBI, aufgenommene Wärme entzogen wurde, in die Kühlung des heiß brikettierten Brikettierungsproduktes, vorzugsweise HBI, ist bevorzugt, da ein solches Recycle-Konzept den Resourcenbedarf des Verfahrens vermindert. Gegebenenfalls wird das Kühlgas nach der Übertragung der Wärme auf ein Wärmetauschermedium auch gewaschen zwecks Staubentfernung - und dabei weiter gekühlt. Nach Verdichtung und gegebenenfalls erfolgender Tropfenabscheidung kann es dann wieder der Kühleinrichtung zur Kühlung von heiß brikettiertem Brikettierungsprodukt, vorzugsweise HBI, zugeführt werden. Gegebenenfalls erfolgt Zugabe eines Make-up Gases wie beispielsweise Stickstoff, um trotz Gasverlusten beziehungsweise Gasentnahme im Verlauf der Recyclierung des Kühlgases auf die Kühlgasmengen zu kommen, die dem Kühler zuzuführen sind - in diesem Fall besteht das dem Kühler zugeführte Kühlgas aus dem Make-up-Gas und dem recyclierten Kühlgas.

Ein weiterer Gegenstand der vorliegenden Anmeldung ist eine Vorrichtung
zur Durchführung eines Verfahrens zur Direktreduktion von eisenoxidhältigen Einsatzstoffen mittels eines Reduktionsgases,
mit einem Reduktionsaggregat,
mit einer Topgasleitung zum Abziehen des bei der Reduktion verbrauchte Reduktionsgases als Topgas aus dem Reduktionsaggregat,
und mit einer Brikettiervorrichtung
zur Brikettierung des Produktes der Direktreduktion zu heiß brikettiertem Brikettierungsprodukt, vorzugsweise HBI,
dadurch gekennzeichnet, dass
sie auch umfasst
eine Kühleinrichtung zur Kühlung des heiß brikettierten Brikettierungsproduktes, vorzugsweise HBI, mittels eines Kühlgases,
einen Wärmetauscher mit einer Zuleitung und einer Ableitung für ein Wärmetauschmedium,
sowie eine Wärmetauschleitung zur Zufuhr von Kühlgas aus der Kühleinrichtung zum Wärmetauscher.

Die Direktreduktion findet im Reduktionsaggregat statt.

In der Brikettiervorrichtung wird das Eisenschwamm-Produkt der Direktreduktion zu heiß brikettiertem Brikettierungsprodukt, vorzugsweise HBI, brikettiert.

In der Kühleinrichtung wird dem heiß brikettierten Brikettierungsprodukt, vorzugsweise HBI, Wärme entzogen, es wird gekühlt. Das geschieht mittels eines Kühlgases.

Kühlgas, das dem heiß brikettierte Brikettierungsprodukt, vorzugsweise HBI, Wärme entzogen hat, und dabei selber erwärmt wurde, wird aus der Kühlvorrichtung abgezogen; zumindest eine Teilmenge dieses abgezogen werdenden Kühlgases wird dem Wärmetauscher zugeführt über die Wärmetauschleitung.

Ein Wärmetauschmedium wird dem Wärmetauscher über eine Zuleitung zugeführt und, nachdem Wärmetausch erfolgt ist, über eine Ableitung abgeführt.

In dem Wärmetauscher wird Wärme von dem über die Wärmetauschleitung zugeleiteten, durch vorherige Kühlung des heiß brikettierten Brikettierungsproduktes, vorzugsweise HBI, erwärmten, Kühlgas auf das Wärmetauschmedium übertragen.

Die Ableitung für das Wärmetauschmedium kann zu anderen Teilen der Vorrichtung führen, so dass die auf das Wärmetauschmedium übertragene Wärme innerhalb des Verfahrens genutzt werden kann. Die Ableitung für das Wärmetauschmedium kann eine oder mehrere Mündungen haben; sie kann also Wärmetauschmedium zu einem oder mehreren Nutzern leiten.

Nach einer Ausführungsform umfasst die Vorrichtung eine chemische CO2-Entfernungsanlage zur CO2-Entfernung aus, gegebenenfalls bereits behandeltem, Topgas. Der CO2-Entfernungsanlage entspringt eine Produktgasausleitung mit einer oder mehreren Mündungen.

Die Behandlung des Topgases ist beispielsweise Dampfzugabe und nachfolgende CO-Shiftreaktion. In diesem Fall wird aus dem behandelten Topgas genannt Shiftgas CO2 entfernt.

Vorzugsweise handelt es sich um eine CO2-Entfernungsanlage zur absorptiven CO2-Entfernung mittels eines Absorptionsmediums.

Nach einer Ausführungsform umfasst die Vorrichtung einen Reformer zur katalytischen Reformierung einer Topgas enthaltenden Gasmischung.

Nach einer Ausführungsform weist der Reformer eine Unterfeuerungsvorrichtung auf, und führt zumindest eine Mündung der Produktgasausleitung zu dieser Unterfeuerungsvorrichtung. Nach einer weiteren Ausführungsform ist ein Gasofen zur Aufheizung des Reduktionsgases oder eines Vorläufers des Reduktionsgases vorhanden, und führt zumindest eine Mündung der Produktgasausleitung zu diesem Gasofen.

Nach einer Ausführungsform umfasst die Vorrichtung eine Vorrichtung zur Dampferzeugung, in welche zumindest eine Mündung der Ableitung für das Wärmetauschmedium einmündet.

Nach einer Ausführungsform ist eine Topgasbehandlungsvorrichtung vorhanden,
umfassend:
- eine Wasserdampfzugabevorrichtung,
- einen CO-Shiftreaktor;
und ist vorhanden eine Behandlungsleitung zur Zufuhr von in der Topgasbehandlungsvorrichtung behandeltem Topgas zur CO2-Entfernungsanlage.

Nach einer Ausführungsform ist in der Behandlungsleitung ein Wärmetauscher zur Herstellung von Wasserdampf vorhanden.

Nach einer Ausführungsform
mündet in den Wärmetauscher zur Herstellung von Wasserdampf zumindest ein Mitglied aus der Gruppe bestehend aus:
- eine Mündung der Ableitung für das Wärmetauschmedium,
- eine Topgas führende Leitung,
- eine aus dem CO-Shiftreaktor austretendes Shiftgas führende Shiftgasleitung,
- eine aus dem Reformer abgezogenes Rauchgas führende Leitung.

Nach einer Ausführungsform geht von dem Wärmetauscher zur Herstellung von Wasserdampf eine Wasserdampfzufuhrleitung aus,
die in
die chemischen CO2-Entfernungsanlage
und/oder
die Wasserdampfzugabevorrichtung
mündet.

Nach einer Ausführungsform ist eine Erwärmungsvorrichtung zur Erwärmung von Produktgas und/oder Reduktionsgas vorhanden, in welche zumindest ein Mitglied aus der Gruppe bestehend aus:
- eine Mündung der Ableitung für das Wärmetauschmedium,
- ein Arm der Topgasleitung,
- aus dem CO-Shiftreaktor austretendes Shiftgas führende Abzweigung der Shiftgasleitung,
- eine aus dem Reformer abgezogenes Rauchgas führende Leitung,
einmündet.

So eine Erwärmungsvorrichtung kann beispielsweise ein direkter oder indirekter Wärmetauscher sein; beispielsweise ein indirekter Wärmetauscher, in dem über die Ableitung für das Wärmetauschmedium zugeführtes Wärmetauschmedium erwärmend wirkt.

Nach einer Ausführungsform ist in der Wasserdampfzufuhrleitung eine Überhitzungsvorrichtung zur Überhitzung von Wasserdampf mittels des Kühlgases vorhanden, in die eine Abzweigung der Wärmetauschleitung einmündet.

### Kurze Beschreibung der Zeichnungen

### Beschreibung der Ausführungsformen

### Beispiele

Figur 1 zeigt schematisch beispielhaft eine Ausführungsform einer erfindungsgemäßen Vorrichtung bei der Durchführung einer Ausführungsform des erfindungsgemäßen Verfahrens zur Direktreduktion von eisenoxidhältigen Einsatzstoffen mittels eines Reduktionsgases.

Figur 2 zeigt schematisch beispielhaft ausgehend von Figur 1 eine erfindungsgemäße Vorrichtung mit mehreren, jeweils optional vorhandenen Nutzungen der Wärme innerhalb des Verfahrens zur Direktreduktion.

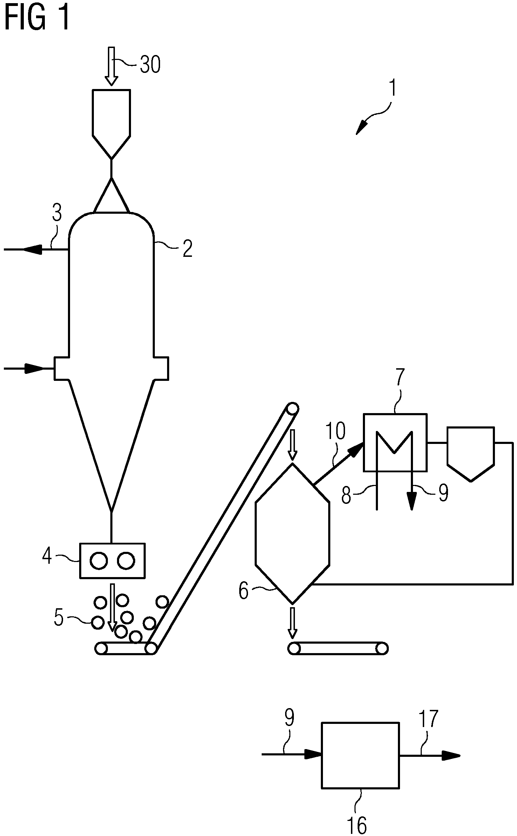

Figur 1 zeigt eine Ausführungsform der erfindungsgemäßen Vorrichtung 1 bei der Durchführung einer Ausführungsform des erfindungsgemäßen Verfahrens zur Direktreduktion von eisenoxidhältigen Einsatzstoffen mittels eines Reduktionsgases.

Sie umfasste ein Reduktionsaggregat 2 mit einer Topgasleitung 3 zum Abziehen des bei der Reduktion verbrauchte Reduktionsgases als Topgas aus dem Reduktionsaggregat 2. Sie umfasst auch eine Brikettiervorrichtung 4 zur Brikettierung des Produktes der Direktreduktion zu heiß brikettiertem Brikettierungsprodukt, im dargestellten Fall HBI 5.

Sie umfasst auch eine Kühleinrichtung 6 zur Kühlung des HBI 5 mittels eines Kühlgases,
einen Wärmetauscher 7 mit einer Zuleitung 8 und einer Ableitung 9 für ein Wärmetauschmedium,
sowie eine Wärmetauschleitung 10 zur Zufuhr von Kühlgas aus der Kühleinrichtung 6 zum Wärmetauscher 7.

Direktreduktion von eisenoxidhältigen Einsatzstoffen findet in dem Reduktionsaggregat 2 mittels eines Reduktionsgases statt. Das bei der Reduktion verbrauchte Reduktionsgas wird als Topgas aus dem Reduktionsaggregat 2 abgezogen wird. Das Produkt der Direktreduktion wird heiß zu HBI 5 brikettiert. Das HBI 5 wird in der Kühleinrichtung 6 mittels eines Kühlgases einer Kühlung unterzogen. Das bei der Kühlung erwärmte Kühlgas wird in den Wärmetauscher 7 eingeleitet, und zumindest ein Teil der in dem Wärmetauscher 7 auf ein Wärmetauschermedium übertragenen Wärme wird innerhalb des Verfahrens zur Direktreduktion von eisenoxidhältigen Einsatzstoffen mittels eines Reduktionsgases genutzt, wie hier beispielsweise gezeigt wird via Dampferzeugung ineiner Vorrichtung zur Dampferzeugung 16, in welche eine Mündung der Ableitung 9 für das Wärmetauschmedium einmündet. Eine Leitung 17 zur Zufuhr von Dampf aus der Vorrichtung zur Dampferzeugung 16 stellt in der dargestellten Ausführungsform Dampf bereit, der unter Nutzung der Wärme des Wärmetauschermediums hergestellt wird. Dieser Dampf kann im Verfahren zur Direktreduktion selbst genutzt und vermindert den Bedarf an anderen Energielieferanten zur Dampferzeugung.

Zur besseren Übersichtlichkeit ist diese Vorrichtung zur Dampferzeugung 16 etwas abgesetzt von der restlichen Vorrichtung schematisch dargestellt.

Die Zufuhr von eisenoxidhältigen Einsatzstoffen in das Reduktionsaggregat 2 ist durch Pfeil 30 symbolisiert.

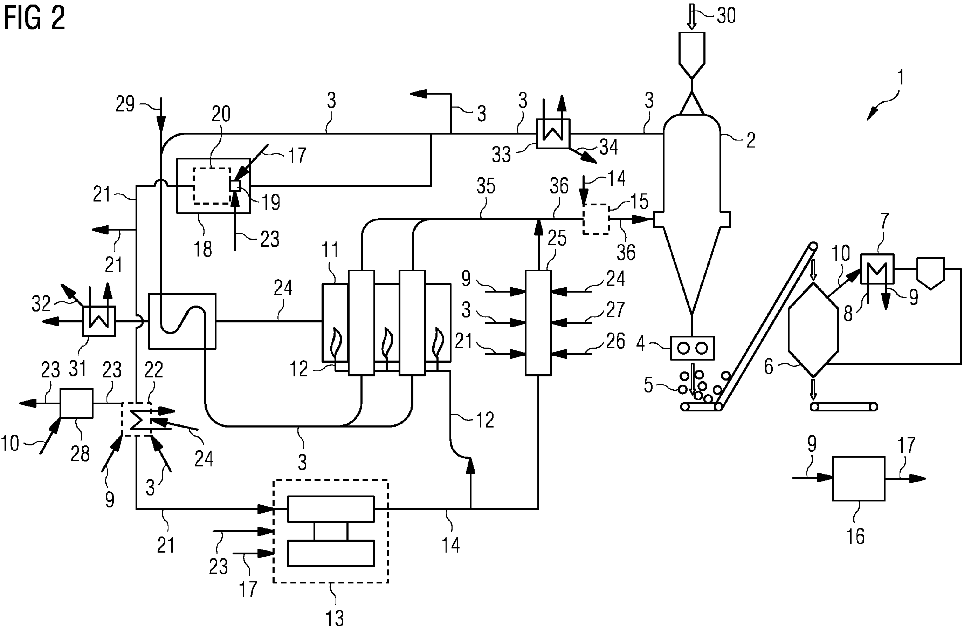

Figur 2 zeigt schematisch beispielhaft ausgehend von Figur 1 eine erfindungsgemäße Vorrichtung mit mehreren, jeweils optional vorhandenen Nutzungen der Wärme innerhalb des Verfahrens zur Direktreduktion. Die dargestellte Herstellung von Reduktionsgas ist beispielhaft; das Reduktionsgas könnte auch anders bereitgestellt werden.

Die dargestellte Vorrichtung 1 umfasst in Figur 2 einen Reformer 11 zur katalytischen Reformierung einer Topgas enthaltenden Gasmischung. In diesem wird das Reduktionsgas unter katalytischer Reformierung mit einer ersten Teilmenge des Topgases erzeugt. Zufuhr der weiteren zur Herstellung von Reduktionsgas im Reformer notwendigen Komponente Erdgas wird durch die Erdgaszufuhrleitung 29, die in die Topgasleitung 3 mündet, symbolisiert.

Der Reformer 11 weist eine Unterfeuerungsvorrichtung 12 auf. Reformergas wird aus dem Reformer 11 ausgeleitet via Reformergasleitung 35.

Die dargestellte Vorrichtung 1 umfasst auch eine chemische CO2-Entfernungsanlage 13 zur CO2-Entfernung aus einer zweiten Teilmenge des Topgases. Aus der CO2-Entfernungsanlage 13 entspringt eine Produktgasausleitung 14 zur Ausleitung von Produktgas mit niedrigem CO2-Gehalt aus der Co2-Entferungsanlage, mit mehreren Mündungen.

Bei der CO2-Entfernungsanlage 13 handelt es sich um eine CO2-Entfernungsanlage zur absorptiven CO2-Entfernung mittels eines Absorptionsmediums. Eine Mündung der Produktgasausleitung 14 führt zur Unterfeuerungsvorrichtung 12.

Eine andere Mündung der Produktgasleitung mündet in die Reformergasleitung 35; durch Mischung von Reformergas und von Produktgas wird Reduktionsgas hergestellt. Eine Teilmenge des Produktgases der CO2-Entfernung wird also zur Erzeugung des Reduktionsgases genutzt. Dadurch wird dessen verbliebenes Reduktionspotential besonders gut in dem Verfahren ausgenutzt.

Das Reduktionsgas wird durch die Reduktionsgasleitung 36 in das Reduktionsaggregat 2 eingeleitet. Es ist auch als optional strichliert dargestellter Gasofen 15 zur Aufheizung des Reduktionsgases in der Reduktionsgasleitung vorhanden. Eine Mündung der Produktgasausleitung 14 führt zu diesem Gasofen 15.

Die dargestellte erfindungsgemäße Vorrichtung umfasst die Vorrichtung zur Dampferzeugung 16, in welche eine Mündung der Ableitung 9 für das Wärmetauschmedium einmündet. Eine Leitung 17 zur Zufuhr von Dampf aus der Vorrichtung zur Dampferzeugung 16 liefert in der in Figur 2 dargestellten Ausführungsform auch Dampf zur CO2-Entfernungsanlage 13; auf diese Weise wird die Wärme des HBI einfach im Verfahren selbst genutzt und vermindert den Bedarf an anderen Energielieferanten zur Dampferzeugung.

Es ist in der dargestellten erfindungsgemäßen Vorrichtung auch eine Topgasbehandlungsvorrichtung 18 vorhanden, umfassend:
- eine Wasserdampfzugabevorrichtung 19,
- einen CO-Shiftreaktor 20;
und es ist vorhanden eine Behandlungsleitung zur Zufuhr von in der Topgasbehandlungsvorrichtung 18 behandeltem Topgas zur CO2-Entfernungsanlage 13. Im dargestellten Fall ist die Behandlungsleitung die Shiftgasleitung 21.

Durch die Behandlung des Topgases wird die Generierung von für die Direktreduktion besonders günstigen Komponenten des Reduktionsgases vorangetrieben.

In der Behandlungsleitung Shiftgasleitung 21 ist ein Wärmetauscher 22 zur Herstellung von Wasserdampf vorhanden. Auf diese Weise wird der Wärmeinhalt nach der exothermen CO-Shiftreaktion in einen Wertstoff umgewandelt, der im Verfahren genutzt werden kann.

Der Wasserdampf, der im Wärmetauscher 22 hergestellt wird, wird über die von diesem ausgehende Wasserdampfzufuhrleitung 23 der chemischen CO2-Entfernungsanlage 13 und/oder der Wasserdampfzugabevorrichtung 19 zugeführt.

Der Wasserdampfzugabevorrichtung 19 kann bei Bedarf auch über die Leitung 17 zur Zufuhr von Dampf aus der Vorrichtung zur Dampferzeugung 16 Dampf zugeführt werden.

Wasserdampf aus dem Wärmetauscher 22 und/oder Wasserdampf hergestellt unter Nutzung von vom Kühlgas für HBI auf das Wärmetauschmedium übertragener Wärme werden dadurch innerhalb des Verfahrens nutzbar.

In der dargestellten erfindungsgemäßen Vorrichtung münden in den Wärmetauscher 22 zur Herstellung von Wasserdampf die Mitglieder aus der Gruppe bestehend aus:
- eine Mündung der Ableitung 9 für das Wärmetauschmedium,
- ein Arm der Topgasleitung 3,
- aus dem CO-Shiftreaktor austretendes Shiftgas führende Shiftgasleitung 21,
- eine aus dem Reformer abgezogenes Rauchgas führende Leitung 24

In der dargestellten erfindungsgemäßen Vorrichtung ist eine Erwärmungsvorrichtung 25 zur Erwärmung von Produktgas vorhanden, in welche die Mitglieder aus der Gruppe bestehend aus:
- eine Mündung der Ableitung 9 für das Wärmetauschmedium,
- ein Arm der Topgasleitung 3,
- aus dem CO-Shiftreaktor austretendes Shiftgas führende Abzweigung der Shiftgasleitung 21,
- eine aus dem Reformer abgezogenes Rauchgas führende Leitung 24,
einmünden.

Dargestellt sind auch die Zuführungsleitung 26 für Luft, und die Zuführungsleitung 27 für Erdgas.

In der Wasserdampfzufuhrleitung 23 ist eine Überhitzungsvorrichtung 28 zur Überhitzung von Wasserdampf mittels des Kühlgases vorhanden, in die eine Abzweigung der Wärmetauschleitung 10 einmündet.

Aus dem Topgas wird Wärme mittels des Wärmetauschers 33 entzogen, wobei Wasserdampf hergestellt wird, abgezogen über Wasserdampfleitung 34.

Aus dem Rauchgas wird Wärme mittels des Wärmetauschers 31 entzogen wobei Wasserdampf hergestellt wird, abgezogen über Wasserdampfleitung 32.

Aus dem Shiftgas wird Wärme mittels des Wärmetauschers 22 entzogen, wobei Wasserdampf hergestellt wird, abgezogen über Wasserdampfleitung 23.

Mittels der Wärmetauscher 22, 31, 33 entzogene Wärme kann genutzt werden zur Erwärmung des zur Herstellung der Reduktionsgases genutzten Teilmenge des Produktgases, oder zur Generierung von zur Regeneration des Absorptionsmediums eingesetztem Wasserdampf - was allerdings zur besseren Übersichtlichkeit nicht extra dargestellt ist.

Im Rahmen dieser Anmeldung sind die Begriffe Wasserdampf und Dampf äquivalent.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Erfindungsgemäße Vorrichtung
- 2: Reduktionsaggregat
- 3: Topgasleitung
- 4: Brikettiervorrichtung
- 5: HBI
- 6: Kühleinrichtung
- 7: Wärmetauscher
- 8: Zuleitung
- 9: Ableitung
- 10: Wärmetauschleitung
- 11: Reformer
- 12: Unterfeuerungsvorrichtung
- 13: CO2-Entfernungsanlage
- 14: Produktgasausleitung
- 15: Gasofen
- 16: Vorrichtung zur Dampferzeugung
- 17: Leitung zur Zufuhr von Dampf
- 18: Topgasbehandlungsvorrichtung
- 19: Wasserdampfzugabevorrichtung
- 20: CO-Shiftreaktor
- 21: Shiftgasleitung
- 22: Wärmetauscher
- 23: Wasserdampfzufuhrleitung
- 24: Rauchgas führende Leitung
- 25: Erwärmungsvorrichtung
- 26: Zuführungsleitung für Luft
- 27: Zuführungsleitung für Erdgas
- 28: Überhitzungsvorrichtung
- 29: Erdgaszufuhrleitung
- 30: Zufuhr eisenoxidhältige Einsatzstoffe
- 31: Wärmetauscher
- 32: Wasserdampfleitung
- 33: Wärmetauscher
- 34: Wasserdampfleitung
- 35: Reformergasleitung

### Liste der Anführungen

### Patentliteratur

US2010264374A

## Patentansprüche

1. Verfahren zur Direktreduktion von eisenoxidhältigen Einsatzstoffen in einem Reduktionsaggregat mittels eines Reduktionsgases, wobei das bei der Reduktion verbrauchte Reduktionsgas als Topgas aus dem Reduktionsaggregat (2) abgezogen wird, und wobei das Produkt der Direktreduktion zu einem Brikettierungsprodukt, vorzugsweise zu HBI (5), heiß brikettiert wird,
**dadurch gekennzeichnet, dass**
das heiß brikettierte Brikettierungsprodukt, vorzugsweise HBI (5), in einer Kühleinrichtung (6) mittels eines Kühlgases einer Kühlung unterzogen wird, und dass zumindest eine Teilmenge des bei der Kühlung erwärmten Kühlgases in einen Wärmetauscher (7) eingeleitet wird, und dass zumindest ein Teil der in dem Wärmetauscher (7) auf ein Wärmetauschermedium übertragenen Wärme innerhalb des Verfahrens genutzt wird.

2. Verfahren nach Anspruch 1, **dadurch gekennzeichnet, dass** das Reduktionsgas unter katalytischer Reformierung mit einer ersten Teilmenge des Topgases erzeugt wird, und/oder , eine zweite Teilmenge des Topgases in einer chemischen CO2-Entfernungsanlage (13) einer CO2-Entfernung unterzogen wird.

3. Verfahren nach einem der vorhergehenden Ansprüche, **dadurch gekennzeichnet, dass** die Nutzung innerhalb des Verfahrens die Nutzung zur Regeneration eines Absorptionsmediums der CO2-Entfernung oder Nutzung für CO-Shiftreaktion von Topgas umfasst.

4. Verfahren nach einem der vorhergehenden Ansprüche, **dadurch gekennzeichnet, dass** zumindest eine Teilmenge des Produktgases der CO2-Entfernung als Brenngas genutzt wird
für zumindest eine Unterfeuerung aus der Gruppe bestehend aus den Mitgliedern
- Unterfeuerung eines Reformers (11) zur katalytischen Reformierung einer ersten Teilmenge des Topgases,
- Unterfeuerung eines Gasofens (15) zur Aufheizung des Reduktionsgases oder eines Vorläufers des Reduktionsgases.

5. Verfahren nach einem der vorhergehenden Ansprüche, **dadurch gekennzeichnet, dass** die Nutzung innerhalb des Verfahrens Erwärmung zumindest eines Teils der zur Erzeugung des Reduktionsgases genutzten Teilmenge des Produktgases vor deren Einleitung in das Reduktionsaggregat (2), bevorzugt vor einer Vermischung mit anderen Komponenten des Reduktionsgases,
umfasst.

6. Verfahren nach einem der vorhergehenden Ansprüche, **dadurch gekennzeichnet, dass** die zweite Teilmenge des Topgases einer Behandlung unterzogen, bevor sie in einer chemischen CO2-Entfernungsanlage (13) einer
CO2-Entfernung unterzogen wird,
wobei diese Behandlung umfasst:
- zuerst Zugabe von Wasserdampf, dann
CO-Shiftreaktion in einem CO-Shiftreaktor (20) wird.

7. Verfahren nach einem der vorhergehenden Ansprüche, **dadurch gekennzeichnet, dass** das bei der CO-Shiftreaktion gewonnene Shiftgas in einen Wärmetauscher (22) zur Herstellung von Wasserdampf eingeleitet wird.

8. Verfahren nach Anspruch 7, **dadurch gekennzeichnet, dass** dieser Wasserdampf
und/oder
Wasserdampf hergestellt unter Nutzung von vom Kühlgas auf das Wärmetauschmedium übertragener Wärme,
zugeführt wird
- der chemischen CO2-Entfernungsanlage (13) zur Regeneration des Absorptionsmediums,
und/oder
- der zweiten Teilmenge des Topgases vor der
CO-Shiftreaktion.

9. Verfahren nach einem der vorhergehenden Ansprüche, **dadurch gekennzeichnet, dass** bei Bedarf an überhitztem Wasserdampf im Verfahren der Wasserdampf mittels des Kühlgases überhitzt wird.

10. Verfahren nach einem der vorhergehenden Ansprüche, **dadurch gekennzeichnet, dass** eine Rückführung von Kühlgas, nachdem ihm die vom heiß brikettierten Brikettierungsprodukt, vorzugsweise HBI (5), aufgenommene Wärme entzogen wurde, in die Kühlung des heiß brikettierten Brikettierungsproduktes, vorzugsweise HBI (5), erfolgt.

11. Vorrichtung (1)
zur Durchführung eines Verfahrens zur Direktreduktion von eisenoxidhältigen Einsatzstoffen (30) mittels eines Reduktionsgases,
mit einem Reduktionsaggregat (2),
mit einer Topgasleitung (3) zum Abziehen des bei der Reduktion verbrauchte Reduktionsgases als Topgas aus dem Reduktionsaggregat (2),
und mit einer Brikettiervorrichtung (4)
zur Brikettierung des Produktes der Direktreduktion zu heiß brikettiertem Brikettierungsprodukt, vorzugsweise HBI (5),
**dadurch gekennzeichnet, dass**
sie auch umfasst
eine Kühleinrichtung (6) zur Kühlung des heiß brikettierten Brikettierungsproduktes, vorzugsweise HBI (5), mittels eines Kühlgases,
einen Wärmetauscher (7) mit einer Zuleitung (8) und einer Ableitung (9) für ein Wärmetauschmedium,
sowie eine Wärmetauschleitung (10) zur Zufuhr von Kühlgas aus der Kühleinrichtung (6) zum Wärmetauscher (7).

12. Vorrichtung nach Anspruch 11, **dadurch gekennzeichnet, dass** die Vorrichtung eine chemische CO2-Entfernungsanlage (13) zur CO2-Entfernung aus, gegebenenfalls bereits behandeltem, Topgas
umfasst,
und/oder
die Vorrichtung einen Reformer (11) zur katalytischen Reformierung einer Topgas enthaltenden Gasmischung umfasst.

13. Vorrichtung nach einem der Ansprüche 11 bis 12, **dadurch gekennzeichnet, dass** die Vorrichtung eine Vorrichtung zur Dampferzeugung (16), in welche zumindest eine Mündung der Ableitung (9) für das Wärmetauschmedium einmündet;
umfasst.

14. Vorrichtung nach einem der Ansprüche 11 bis 13, **dadurch gekennzeichnet, dass** eine Topgasbehandlungsvorrichtung (18) vorhanden ist,
umfassend:
- eine Wasserdampfzugabevorrichtung (19),
- einen CO-Shiftreaktor (20);
und eine Behandlungsleitung zur Zufuhr von in der Topgasbehandlungsvorrichtung behandeltem Topgas zur CO2-Entfernungsanlage (13) vorhanden ist.

15. Vorrichtung nach Anspruch 14, **dadurch gekennzeichnet, dass** in der Behandlungsleitung ein Wärmetauscher (22) zur Herstellung von Wasserdampf vorhanden ist, in den zumindest ein Mitglied aus der Gruppe bestehend aus:
- eine Mündung der Ableitung für das Wärmetauschmedium (9),
- eine Topgas führende Leitung (3),
- eine aus dem CO-Shiftreaktor austretendes Shiftgas führende Shiftgasleitung (21),
- eine aus dem Reformer abgezogenes Rauchgas führende Leitung (24)
mündet.

16. Vorrichtung nach Anspruch 14, **dadurch gekennzeichnet, dass** in der Behandlungsleitung ein Wärmetauscher (22) zur Herstellung von Wasserdampf vorhanden ist, von dem eine Wasserdampfzufuhrleitung (23) ausgeht,
die in
die chemischen CO2-Entfernungsanlage (13)
und/oder
die Wasserdampfzugabevorrichtung (19)
mündet.

17. Vorrichtung nach einem der Ansprüche 11 bis 16, **dadurch gekennzeichnet, dass** eine Erwärmungsvorrichtung (25) zur Erwärmung von Produktgas und/oder Reduktionsgas vorhanden ist, in welche zumindest ein Mitglied aus der Gruppe bestehend aus:
- eine Mündung der Ableitung (9) für das Wärmetauschmedium,
- ein Arm der Topgasleitung (3),
- aus dem CO-Shiftreaktor austretendes Shiftgas führende Abzweigung der Shiftgasleitung (21),
- eine aus dem Reformer abgezogenes Rauchgas führende Leitung 24,
einmündet.

18. Vorrichtung nach einem der Ansprüche 11 bis 17, **dadurch gekennzeichnet, dass** in der Wasserdampfzufuhrleitung (23) eine Überhitzungsvorrichtung (28) zur Überhitzung von Wasserdampf mittels des Kühlgases vorhanden ist, in die eine Abzweigung der Wärmetauschleitung (10) einmündet.
